Europäisches Patentamt

European Patent Office

Office européen des brevets

(19)

(11) Publication number: **0 058 494**
**B1**

(12) **EUROPEAN PATENT SPECIFICATION**

(45) Date of publication of patent specification: **04.09.85**

(21) Application number: **82300557.4**

(22) Date of filing: **03.02.82**

(51) Int. Cl.⁴: **A 01 G 9/14, C 03 B 13/00, C 03 B 13/04, E 04 C 2/54, E 06 B 3/66**

(54) Double glazing.

(30) Priority: **17.02.81 GB 8104999**

(43) Date of publication of application:
**25.08.82 Bulletin 82/34**

(45) Publication of the grant of the patent:
**04.09.85 Bulletin 85/36**

(84) Designated Contracting States:
**BE DE FR NL**

(56) References cited:
**DE-A-2 802 179**
**DE-A-2 924 626**
**GB-A- 429 751**
**GB-A- 816 495**
**GB-A- 854 154**

(73) Proprietor: **PILKINGTON BROTHERS P.L.C.**
**Prescot Road St. Helens**
**Merseyside, WA10 3TT (GB)**

(72) Inventor: **Dunning, Malcolm John**
**7 Hartley Crescent**
**Southport Merseyside (GB)**
Inventor: **Melding, Andrew David**
**36 Maple Close**
**Billinge Merseyside (GB)**
Inventor: **Steere, Robin Charles**
**47 Rutland Crescent**
**Ormskirk Lancashire (GB)**

(74) Representative: **Haggart, John Pawson et al**
**Page, White & Farrer 5 Plough Place New Fetter Lane**
**London EC4A 1HY (GB)**

EP 0 058 494 B1

Courier Press, Leamington Spa, England.

# Description

The present invention relates to double glazing sheeting suitable for glazing a greenhouse, and a method of producing a shaped glass pane for use in the production of the double glazing sheeting.

Double glazing for normal architectural applications is known in which the peripheral margins of the flat glass panes of a unit are spaced apart by separate spacer elements to define an air space between the panes. Such units may be sealed or unsealed but, in either case, have the disadvantage that the use of these spacer elements adds to the cost of production.

The requirements for double glazing a greenhouse are simpler because it is not necessary for the glazing to be of high optical quality, although it is desirable to keep light transmission levels high. Nor is it very important, for horticultural glazing, to avoid temporary deposits e.g. of condensation or dust, on the panes, provided these are removable.

GB—A—429,751 describes the production of insulating panels in which two glass sheets of dished formation have flanges all the way round their margins, which flanges are fused or cemented together. The flanges are formed by forming peripheral bends around the sheets at an angle of at least 50°.

GB—A—734,922 discloses welded double glazing units which comprises plates of glass welded together around their peripheries to provide a sealed air space between the plates. The periphery of the upper pane is bent down at an angle of at least 45°, towards the edge of the lower pane, which is not bent, but thickened. Although the use of spacer elements for providing the air space is obviated the welding operation is expensive.

DE—A—2 924 626 describes welded glass units with profiled edges formed by bends of at least 50°. DE—A—2 802 179 describes glazing units made of sheets of plastics material with edges bent at an angle of at least 35°.

GB—A—816,495 describes a method of rolling glass into a desired shape and then supporting the glass until it is cool enough to retain its shape unsupported. A disadvantage of this method is that the glass needs to be shaped at two separate locations, beginning as the glass ribbon is formed from the molten glass, for example at about 1000°C, and then the ribbon is supported after it has attained the desired shape.

GB—A—854,154 describes a process for producing angular sections of glass in which a ribbon of glass is shaped and the shaped glass is then conveyed to an annealing apparatus. As in the method described in GB—A—816,495 shaping is begun whilst the glass is still very hot, and the shaped glass is not produced in a single stage forming operation.

It is an object of the present invention to provide double glazing suitable for use in glazing a greenhouse in which two panes of glass are secured together along opposite margins and produced by a method in which a glass ribbon can be shaped in a forming operation carried out at a relatively low temperature so avoiding or at least alleviating the need to support the formed glass and thus facilitating the maintenance of high production speeds.

According to the present invention there is provided double glazing sheeting suitable for glazing a greenhouse, comprising two discrete panes of glass secured together along one pair of opposite margins thereof, at least one of the panes having a bend extending along or parallel to those margins to define an air space between the panes, characterised in that the bend is defined between two adjacent portions of the same pane which include between them an angle of at least 150°.

Each pane may be formed with two of said bends extending along opposite margins, which bends are stepped to form marginal flanges which are secured to the corresponding flanges of the other pane.

One pane may be formed with two of said bends extending along opposite margins, which bends are stepped to form flanges secured to opposite unbent margins of the other pane.

Each pane may be formed with one said bend extending along a margin, which bend is stepped to form a flange which is secured to an unbent margin of the other pane.

The panes may be secured together by adhesive which may comprise an ultra-violet curing adhesive or a butyl cord, or may be secured together mechanically for example by clamping.

The air space may be in the range 4 to 30 mm wide.

The invention also comprehends a shaped glass pane for use in double glazing sheeting of the invention, which pane has bends, stepped to form flanges, extending along one pair only of opposite margins, characterised in that each bend is defined between two adjacent portions of the pane which include between them an angle of at least 150°.

Also according to the present invention there is provided a method of producing a shaped glass pane for use in the production of double glazing sheeting of the invention, by applying shaping tools to an advancing glass ribbon to form a bend extending along or parallel at least one margin of the ribbon, and cutting the ribbon transversely, characterised by applying the shaping tools to the glass ribbon while the viscosity of the glass is in the range $10^{6.4}$ to $10^{8.6}$ Pas to form in a single operation a bend defined between two adjacent portions of the pane which include between them an angle of at least 150°.

At least the off-set portion of the ribbon produced by the formation of the bend may be cooled during or immediately after the formation of the bend.

The shaping tools may be altered near an edge of the ribbon to produce the bend between a marginal flange and the rest of the ribbon.

The shaping tools may be applied near each edge of the ribbon to produce two bends between marginal flanges and the central part of the ribbon.

The shaping tools may be applied to a central region of the ribbon to produce an off-set portion along the central region, which off-set portion has a flat top, and thereafter the off-set portion is cut longitudinally to produce two said shaped panes each having a stepped margin including a marginal flange.

The shaping tool means may be applied at each margin and at the central region of the ribbon.

Some embodiments of the invention will now be described by way of example, with reference to the accompanying drawings in which:—

Figure 1 shows, schematically, part of an embodiment of double glazing sheeting according to the present invention, comprising two panes of glass each having bent margins at opposite sides thereof,

Figure 2 shows in cross-section the double glazing sheeting illustrated in Figure 1, connected to adjacent double glazing sheeting means of glazing bars and glazing caps,

Figure 3 shows, schematically, part of a second embodiment of double glazing sheeting according to the present invention comprising one pane of glass having bent margins at opposite sides and a flat pane of glass,

Figure 4 shows, schematically, part of a third embodiment of double glazing sheeting according to the present invention, comprising two panes of glass each having one bent margin,

Figure 5 shows, schematically, part of a fourth embodiment of double glazing sheeting according to the present invention, comprising one pane of glass bent along a central region thereof and one flat pane of glass,

Figures 6 and 7 show in cross-section shaped glass sheets for use in producing double glazing sheeting according to the present invention,

Figure 8 shows an apparatus, viewed in the longitudinal direction of the ribbon, for producing a shaped glass ribbon, and

Figure 9 shows a plan view of the apparatus illustrated in Figure 8.

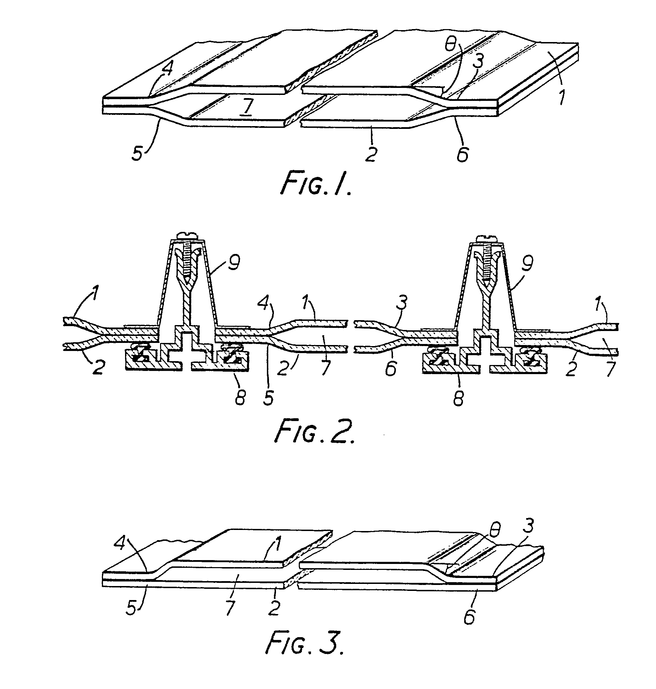

Referring to the drawings, Figure 1 shows an embodiment of double glazing sheeting suitable for use in glazing a greenhouse, comprising two panes of glass 1, 2 each having bent margins 3, 4, 5, 6 at opposite sides thereof which are stepped to form flanges extending along the sides of the panes. These bent margins define an air space 7 between the panes.

Figure 2 shows the double glazing sheeting illustrated in Figure 1 connected to adjacent double glazing sheeting by means of conventional glazing bars 8 and clamped down by means of the glazing caps 9.

Figure 3 shows double glazing sheeting in which one pane of glass 1 has bent margins 3 and 4 at opposite sides thereof and the other pane of glass 2 is flat, the bent margins 3 and 4 of the pane 1 are stepped to form flanges which are secured to the unbent margins of the pane 2, thereby defining the air space 7 between the panes.

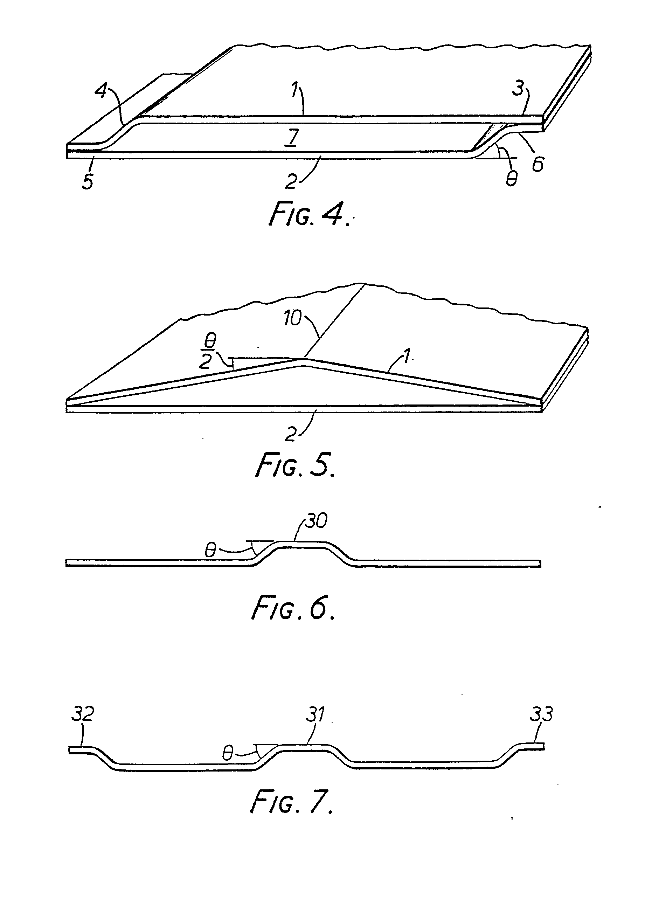

Figure 4 shows double glazing sheeting in which each pane of glass 1, 2 has one bent margin 4, 6 and one unbent margin 3, 5. Each bent margin is stepped to form a flange which is secured to an unbent margin of the other pane.

Figure 5 shows double glazing sheeting in which one pane of glass 1 is bent along its central region 10 so as to be roof-shaped and the other pane of glass 2 is flat.

For lightness and economy the glass used to produce the double glazing sheeting preferably has a thickness in the range 2 to 4 mm. The thermal insulation provided by double glazing increases with the air space until an air space of approximately 50 mm is reached and thereafter the increase in insulation diminishes. In the double glazing sheeting according to the present invention the air space is preferably at least 4 mm and for convenience of manufacture and handling of the panes is preferably not greater than 30 mm. The air space may be in the range of 6 to 30 mm.

In the embodiment of Figures 1 to 4, the bent portions of the margins can be considered to be inclined at a specific angle to the plane of the pane of glass.

The bend is defined between two adjacent portions of the same pane having an inclination relative to each other of θ, as shown in Figs. 1 to 4. From practical consideration and in order to produce useful results the minimum angle for θ is 2° although it is theoretically possible to have lower angles. The practical upper limit for the angle θ is approximately 30° since the formation of larger angles could complicate the shaping and cutting process. The preferred range of angles is from 3° to 20° since this provides the best compromise between exigencies of production and the desirability of obtaining air space of at least 10 mm in panes of suitable width for use in standard horticultural glazing systems.

In the embodiments shown in Figures 1 to 4 the margins 3 and 4 of the pane 1 can be secured to the margins 6 and 5 respectively of the pane 2 by for example a glue between the margins. A suitable glue is LOCTITE (Trade Mark) 385 adhesive which after assembling of the glass panes 1, 2 as shown in Figure 1 is cured under ultra-violet light for approximately 30 seconds by the use of for example PHILIPS MBU400V lamps. If a butyl cord is used it can be placed along the margins of one pane and the other pane then pressed onto the cord.

The panes of the double glazing sheeting shown in Figures 1 to 5 are secured together along two opposite margins only and the other two margins are open. This can be tolerated if the sheeting is to be used for glazing a greenhouse since the temporary deposit of small amounts of foreign matter, such as wind-blown soil, on the panes does not particularly matter. However, when used for glazing a greenhouse it may be preferable to have a barrier at the upper end of the sheeting to prevent direct entry of falling dust and rain into the air space. Nevertheless, it is preferable to provide some form of access so that for example a spray can be used to remove any substantial accumulation of for example algae on the glass surfaces.

The sheeting shown in Figures 1 to 5 each comprise two panes of equal plan area, exactly in register. However, the edge of one pane can be made to extend beyond the edge of the other pane to provide a marginal area having the thickness of one pane. This may be desirable if, for example, the glazing system used is able to accommodate only a single thickness of glass.

In each embodiment there may be a protective strip of plastics material, for example polyvinyl chloride along the edges of one of the panes to cushion the contact between the panes.

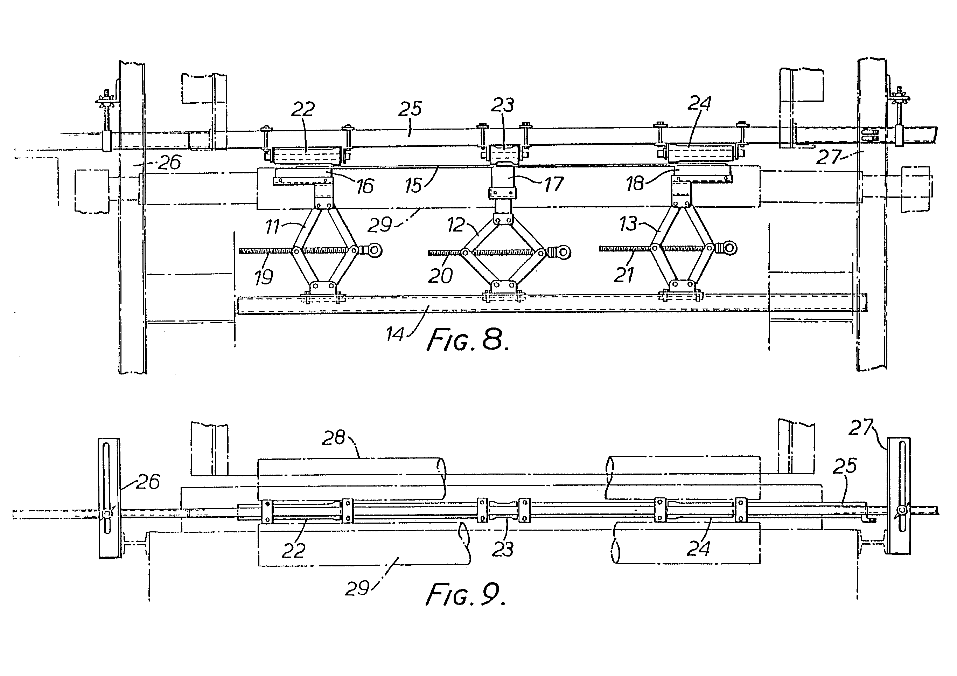

For manufacturing a shaped glass pane for use in producing the double glazing sheeting, the apparatus shown in Figures 8 and 9 may be employed. This apparatus comprises three scissor jacks 11, 12, 13 mounted on a floor 14 under a roller glass production line just upstream of an annealing lehr. The jacks are spaced from one another transversely of the direction of advance of the ribbon of glass 15. Each jack 11, 12, 13 carries at its upper end a carbon shaping tool 16, 17, 18, which is located beneath the ribbon 15, and with means 19, 20, 21 for individually raising each shaping tool 16, 17, 18 above the plane of the ribbon.

Above the ribbon 15 and above each shaping tool 16, 17, 18 is located a polishing carbon shaping roller, 22, 23, 24 respectively, which are idler rollers and are each mounted on a beam 25 which has water passages for cooling the beam. The beam is fixed to stanchions 26, 27 at each side of the production line.

In front of and behind the jacks 11, 12, 13 and shaping rollers 22, 23, 24, are further rollers 28, 29 which extend across the production line and which support the glass ribbon 15 in the region of the jacks and shaping rollers.

The surface of the shaping tools and rollers may be of other suitable material. Certain metals, for example steel, may be used to constitute the shaping tools or rollers.

### Example 1

To produce a shaped glass pane having the cross-section shown in Figure 6 a rolled ribbon of soda-lime-silica glass having a thickness of 4 mm and a width of 1440 mm was advanced through the apparatus shown in Figures 8 and 9. The central shaping tool 17 was in a raised position above the plane of the ribbon 15 and the two lateral shaping tools 16, 18 were maintained below the plane of the ribbon 15. None of the shaping rollers 22, 23, 24 were employed to shape the ribbon. The shaping tool 17 was located at a position where the glass has a viscosity in the range $10^7$ to $10^8$ Pas, the temperature being in the range of 680°C for soda-lime-silica glass. As the ribbon was advanced through the line the shaping tool 17 formed a raised off-set position 30, Figure 6, which progressively extended longitudinally along the central region of the ribbon. As the raised off-set portion was being formed air jets were directed onto the top surface of the ribbon to cool it and "freeze" the raised off-set position thereby obviating any need for subsequently supporting the ribbon provided with the raised off-set portion. The ribbon was thereafter cut transversely and longitudinally along its centre line so as to produce two shaped panes having a cross-section of each of the panes shown in Figure 4. The angle $\theta$ of the bend produced by the raised off-set portion can be varied by controlling the height of the shaping tool 17 above the plane of the ribbon 15. The minimum angle $\theta$ for a useful gap of 4 mm was approximately 3°. For a gap of 20 mm the angle $\theta$ was approximately 10.3°.

### Example 2

To produce shaped glass having the cross-section shown in Figure 7 a rolled ribbon of soda-lime-silica glass having a thickness of 3 mm and a width of 1440 mm was advanced through the apparatus shown in Figures 8 and 9 at a speed of 400 m/hr. The three shaping tools 17, 18, 19 were all in a raised position above the plane of the ribbon 15 and the shaping rollers 22, 23, 24 were located to co-operate with the shaping tools. As in the Example 1 the shaping tools were located at a position where the viscosity of the glass was in the range $10^7$ to $10^8$ Pas and the temperature was in the range of 680°C to 720°C. As the ribbon 15 was advanced through the line the shaping tools 16, 17, 18 formed a raised off-set portion 31 which progessively extended along the central region of the ribbon 15 and a further raised off-set portions 32, 33 at each lateral margin of the ribbon 15. Each shaping roller 22, 23, 24, co-operated with its respective shaping tool to assist in forming the shape of the raised off-set portions. The ribbon was thereafter cut longitudinally along its centre line and transversely so as to produce shaped panes having the cross-section of each of the panes shown in Figure 1.

In the two Examples of the present invention described above the angle $\theta$ was kept relatively low. This avoids the substantial problems which arise when cutting a moving ribbon of glass of channel-shaped cross-section in which the sides of the channel are steeply inclined to the base of the channel.

It was found that when the shaping process is begun when the glass viscosity has increased to $10^{6.4}$ Pa.s, it is likely to be difficult to achieve values of $\theta$ significantly greater than 30°C.

To achieve higher angles, it would be necessary to shape the ribbon in a number of successive stages, starting at a glass viscosity below $10^{6.4}$ Pas and supporting the shaped portions when these are formed . Such a multistage process begun at high temperature, for example the process described in GB—A—816,495 does not permit such high production speeds as the present process.

In the two Examples described above the shaping tools were positioned where the ribbon viscosity was in the range $10^7$ to $10^8$ Pa.s and the temperature was in the range 680°C to 720°C, in order to form the bends in a single forming operation. The forming operation could be carried out at a viscosity in the range $10^{6.4}$ to $10^{8.6}$ Pa.s and at a temperature in the range 650°C to 750°C.

Some support may be provided to maintain the shape of the ribbon after forming the off-set portions, particularly if the off-set portions are formed when the glass is at the upper end of the viscosity range and the off-set portions are cooled on or immediately after formation. Although the working range has been described in terms of both viscosity and temperature, for general application of the present invention to various types of glass it is the viscosity of the glass rather than the temperature which is important. For the standard soda-lime-silica glass composition used the temperature quoted correspond to the following viscosities:—

| Temperature: °C | Viscosity: Pa.s |
| --- | --- |
| 650 | $10^{8.6}$ |
| 680 | $10^8$ |
| 720 | $10^7$ |
| 750 | $10^{6.4}$ |

The examples given above refer to the shaping of a rolled ribbon of glass. In appropriate circumstances, the method of the invention may be applied to glass ribbon formed in other ways, for example, a float glass ribbon, or a sheet glass ribbon formed by a vertical drawing process, especially a sheet glass ribbon that has been turned so that it is advancing horizontally.

## Claims

1. Double glazing sheeting suitable for glazing a greenhouse, comprising two discrete panes of glass (1, 2) secured together along one pair of opposite margins (3, 4, 5, 6) thereof, at least one of the panes having a bend extending along or parallel to those margins to define an air space (7) between the panes, characterised in that the bend is defined between two adjacent portions of the same pane which include between them an angle of at least 150°.

2. Double glazing sheeting according to Claim 1, characterised in that each pane (1, 2) is formed with two of said bends extending along opposite margins, which bends are stepped to form marginal flanges which are secured to the corresponding flanges of the other pane.

3. Double glazing sheeting according to Claim 1, characterised in that one pane (1) is formed with two of said bends extending along opposite margins, which bends are stepped to form flanges secured to opposite unbent margins of the other pane (2).

4. Double glazing sheeting according to Claim 1, characterised in that each pane (1, 2) is formed with one said bend extending along a margin, which bend is stepped to form a flange which is secured to an unbent margin of the other pane.

5. Double glazing sheeting according to any one of Claims 1 to 4, characterised in that the panes are secured together by means of an ultra-violet curing adhesive.

6. Double glazing sheeting according to any one of Claims 1 to 4, characterized in that the panes are secured together by an adhesive in the form of a butyl cord.

7. Double glazing sheeting according to any one of Claims 1 to 6, characterised in that the air space is in the range 4 to 30 mm wide.

8. A shaped glass pane (1) for use in double glazing sheeting according to Claim 2, which pane has bends, stepped to form flanges, extending along one pair only of opposite margins (3, 4), characterised in that each bend is defined between two adjacent portions of the pane which include between them an angle of at least 150°.

9. A method of producing a shaped glass pane for use in double glazing sheeting according to Claim 1, by applying shaping tools (16, 17, 18, 22, 23, 24) to an advancing glass ribbon (15) to form a bend extending along or parallel at least one margin of the ribbon, and cutting the ribbon transversely, characterised by applying the shaping tools to the glass ribbon while the viscosity of the glass is in the range $10^{6.4}$ to $10^{8.6}$ Pas to form in a single operation a bend defined between two adjacent portions of the pane which include between them an angle of at least 150°.

10. A method according to Claim 9, characterised in that the off-set portion of the ribbon produced by the formation of the bend is cooled during or immediately after the formation of the bend.

11. A method according to Claim 9 or Claim 10, characterised by applying the shaping tools near an edge of the ribbon to produce the bend between a marginal flange and the rest of the ribbon.

12. A method according to Claim 9 or Claim 10, characterised by applying the shaping tools near each edge of the ribbon to produce two bends between marginal flanges and the central part of the ribbon.

13. A method according to Claim 9 or Claim 10, characterised by applying the shaping tools to the central region of the ribbon to produce an off-set portion along the central region, which off-set portion has a flat top, and thereafter cutting the off-set portion longitudinally to produce two shaped panes each having a stepped margin including a marginal flange.

14. A method according to Claim 12 and Claim 13, characterised in that the shaping tools are applied at each margin and at the central region of the ribbon.

15. A method according to Claim 13, characterised in that the off-set portion is raised by the shaping tools.

## Revendications

1. Vitrage double convenant au vitrage d'une serre, comprenant deux panneaux de verre physiquement distincts (1, 2) fixés l'un à l'autre par deux de leurs rives opposées (3, 4, 5, 6), au moins l'un des panneaux comportant un coude s'étendant le long de ou parallèlement à ces rives afin de définir une lame d'air (7) entre les panneaux, caractérisé en ce que le coude est défini entre deux parties adjacentes du même panneau qui forment, entre elles, un angle d'au moins 150°.

2. Vitrage double selon la revendication 1, caractérisé en ce que chaque panneau (1, 2) est formé de façon à comporter deux desdits coudes s'étendant le long rives opposées, lesquels coudes sont décalés pour former des rebords marginaux qui sont fixés aux rebords correspondants de l'autre panneau.

3. Vitrage double selon la revendication 1, caractérisé en ce qu'un premier panneau (1) comporte deux desdits coudes qui s'étendent le long de rives opposées, lesquels coudes sont décalés pour former des rebords fixés à des rives non coudées opposées de l'autre panneau (2).

4. Vitrage double selon la revendication 1, caractérisé en ce que chaque panneau (1, 2) comporte un coude s'étendant le long d'une rive, lequel coude est décalé pour former un rebord qui est fixé à une rive non coudée de l'autre panneau.

5. Vitrage double selon l'une quelconque des revendications 1 à 4, caractérisé en ce que les panneaux sont fixés l'un à l'autre au moyen d'un adhésif à durcissement par ultraviolets.

6. Vitrage double selon l'une quelconque des revendications 1 à 4, caractérisé en ce que les panneaux sont fixés l'un à l'autre par un adhésif sous la forme d'un cordon de butyle.

7. Vitrage double selon l'une quelconque des revendications 1 à 6, caractérisé en ce que la lame d'air présente une largeur comprise dans la plage de 4 à 30 mm.

8. Panneau de verre façonné (1) à utiliser dans un vitrage double selon la revendication 2, lequel panneau comporte des coudes, décalés pour former des rebords, s'étendant le long d'une seule paire de rives opposées (3, 4), caractérisé en ce que chaque coude est défini entre deux parties adjacentes du panneau qui forment entre elles un angle d'au moins 150°.

9. Procédé de production d'un panneau de verre façonné à utiliser dans un vitrage double selon la revendication 1, par l'application d'outils de façonnage (16, 17, 18, 22, 23, 24) sur un ruban de verre avançant (15) pour former un coude s'étendant le long de ou parallèlement à au moins une rive du ruban, et par la coupe du ruban transversalement, caractérisé par l'application des outils de façonnage au ruban de verre, tandis que la viscosité du verre est comprise dans la plage $10^{6,4}$ à $10^{8,6}$ Pa.s afin de former en une seule opération un coude défini entre deux parties adjacentes du panneau qui forment entre elles un angle d'au moins 150°.

10. Procédé selon la revendication 9, caractérisé en ce que la partie déportée du ruban produite par la formation du coude est refroide pendant ou immédiatement après la formation du coude.

11. Procédé selon la revendication 9 ou la revendication 10, caractérisé par l'application des outils de façonnage à proximité d'un bord du ruban pour produire le coude entre un rebord marginal et la partie restante du ruban.

12. Procédé selon la revendication 9 ou la revendication 10, caractérisé par l'application des outils de façonnage à proximité de chaque bord du ruban pour produire deux coudes entre des rebords marginaux et la partie centrale du ruban.

13. Procédé selon la revendication 9 ou la revendication 10, caractérisé par l'application des outils de façonnage à la région centrale du ruban pour produire une partie déportée le long de la région centrale, laquelle partie déportée comporte un dessus plat, puis par la coupe longitudinale de la partie déportée pour produire deux panneaux façonnés ayant chacun un rebord décalé comprenant un rebord marginal.

14. Procédé selon la revendication 12 et la revendication 13, caractérisé en ce que les outils de façonnage sont appliqués à chaque rive et à la région centrale du ruban.

15. Procédé selon la revendication 13, caractérisé en ce que la partie déportée est élevée par les outils de façonnage.

## Patentansprüche

1. Doppelverglasung zum Verglasen eines Gewächshauses, mit zwei getrennten Scheiben aus Glas (1, 2), die längs ihrer beiden gegenüberliegenden Ränder (3, 4, 5, 6) zusammengefügt sind, wobei mindestens eine der Scheiben eine Biegung aufweist, welche längs oder parallel zu diesen Rändern verläuft, um zwischen den Scheiben einen Luftraum (7) auszubilden, dadurch gekennzeichnet, daß die Biegung zwischen zwei benachbarten Abschnitten der gleichen Scheibe ausgebildet ist, welche untereinander einen Winkel von mindestens 150° einschließen.

2. Doppelverglasung nach Anspruch 1, dadurch gekennzeichnet, daß jede Scheibe (1, 2) mit zwei Biegungen versehen ist, die längs der gegenüberliegenden Ränder verlaufen, wobei die Biegungen stufenförmig ausgeführt sind und am Rand Flansche bilden, die an den entsprechenden Flanschen der anderen Scheibe befestigt sind.

3. Doppelverglasung nach Anspruch 1, dadurch gekennzeichnet, daß eine Scheibe (1) mit zwei Biegungen versehen ist, die längs der gegenüberliegenden Ränder verlaufen, wobei die Biegungen stufenförmig ausgeführt sind und Flansche bilden, die an den benachbarten nicht-gebogenen Rändern der anderen Scheibe (2) befestigt sind.

4. Doppelverglasung nach Anspruch 1, dadurch gekennzeichnet, daß jede Scheibe (1, 2) mit einer Biegung versehen ist, die längs eines Randes verläuft, wobei die Biegung stufenförmig ausgeführt ist und einen Flansch bildet, der an einem nicht-gebogenen Rand der anderen Scheibe befestigt ist.

5. Doppelverglasung nach einem der Ansprüche 1—4, dadurch gekennzeichnet, daß die Scheiben mittels eines ultraviolett-aushärtenden Klebers aneinander befestigt sind.

6. Doppelverglasung nach einem der Ansprüche 1—4, dadurch gekennzeichnet, daß die Scheiben mittels eines Klebers in Form einer Butylschnur aneinander befestigt sind.

7. Doppelverglasung nach einem der Ansprüche 1—6, dadurch gekennzeichnet, daß der Luftraum eine Breite im Bereich von 4 bis 30 mm aufweist.

8. Geformte Glasscheibe (1) zur Verwendung in einer Doppelverglasung nach Anspruch 2, wobei die Scheibe Biegungen aufweist, die stufenförmige ausgeführt sind und Flansche bilden, welche nur längs zweier entgegengesetzter Ränder (3, 4) verlaufen, dadurch gekennzeichnet, daß jede Biegung zwischen zwei benachbarten Abschnitten der Scheibe ausgebildet ist, die untereinander einen Winkel von mindestens 150° einschließen.

9. Verfahren zur Herstellung einer geformten Glasscheibe zur Verwendung in der Doppelverglasung nach Anspruch 1, wobei Formwerkzeuge (16, 17, 18, 22, 23, 24) gegen einen eine Vorschubbewegung ausführenden Glasstreifen (15) angestellt werden, um eine Biegung zu formen, welche längs oder parallel zu mindestens einem Rand des Streifens verläuft, und wobei der Streifen in Querrichtung geschnitten wird, dadurch gekennzeichnet, daß die Formwerkzeuge gegen den Glasstreifen angestellt werden, wenn die Viskosität des Glases im Bereich von $10^{6,4}$ bis $10^{8,6}$ Pas liegt, um in einem einzigen Arbeitsgang eine Biegung auszubilden, die zwischen zwei benachbarten Abschnitten der Scheibe verläuft, welche miteinander einen Winkel von mindestens 150° einschließen.

10. Verfahren nach Anspruch 9, dadurch gekennzeichnet, daß der durch die Ausbildung der Biegung versetzte Teil des Streifens im Verlauf oder unmittelbar nach der Ausbildung der Biegung angekühlt wird.

11. Verfahren nach Anspruch 9 oder 10, dadurch gekennzeichnet, daß die Formwerkzeuge in der Nähe einer Kante des Streifens angesetzt werden, um die Biegung zwischen einem Randflansch und dem Rest des Streifens auszubilden.

12. Verfahren nach Anspruch 9 oder 10, dadurch gekennzeichnet, daß die Formwerkzeuge in der Nähe jeder Kante des Streifens angelegt werden, um zwei Biegungen zwischen den Randflanschen und dem Mittelteil des Streifens auszubilden.

13. Verfahren nach Anspruch 9 oder 10, dadurch gekennzeichnet, daß die Formwerkzeuge am Mittelteil des Streifens angesetzt werden, um einen versetzten Teil längs des Mittelbereichs zu erzeugen, wobei der versetzte Teil einen flachen Oberteil aufweist, und daß sodann der versetzte Teil in Längsrichtung aufgeschnitten wird, um zwei geformte Scheiben zu bilden, von denen jede einen stufenförmigen Rand mit einem Randflansch aufweist.

14. Verfahren nach Anspruch 12 und 13, dadurch gekennzeichnet, daß die Formwerkzeuge an jedem Rand und im Mittelbereich des Streifens angesetzt werden.

15. Verfahren nach Anspruch 13, dadurch gekennzeichnet, daß der versetzte Teil durch die Formwerkzeuge angehoben wird.

FIG. 1.

FIG. 2.

FIG. 3.

1

FIG. 4.

FIG. 5.

FIG. 6.

FIG. 7.

FIG. 8.

FIG. 9.

0 058 494